# EUROPÄISCHE PATENTANMELDUNG

(11) **EP 4 566 726 A1**
(43) Veröffentlichungstag der Anmeldung: **11.06.2025**
(21) Anmeldenummer: 24206841.9
(22) Anmeldetag: 16.10.2024
(51) Int. Cl.: B07C 5/36, B25J 9/00, B25J 9/16

(54) **VERFAHREN ZUM UMVERTEILEN VON PACKSTÜCKEN IN EINER SORTIERSTATION**

(30) Priorität: 07.12.2023 DE 102023134278
(71) Anmelder: Deutsche Post AG, 53113 Bonn (DE)
(72) Erfinder: LANGER, Frank, 53844 Troisdorf (DE); FELTEN, Florian, 53343 Wachtberg (DE)
(74) Vertreter: Cohausz & Florack

(57) **Zusammenfassung**

Beschrieben uns dargestellt ist ein Verfahren zum Umverteilen von Packstücken (2) in einer Sortierstation (1). Damit die Effizienz von Sortierstationen mit vertretbarem Aufwand weiter gesteigert werden kann, ist vorgesehen, dass die Packstücke (2) in wenigstens einer Transportreihenfolge (4) zum Erfassen jeweils wenigstens eines Sortierparameters nacheinander gemäß der wenigstens einen Transportreihenfolge (4) gescannt werden, dass die gescannten Packstücke (2) in der wenigstens einen Transportreihenfolge (4) in einer Sortiereinrichtung (6) anhand des wenigstens einen Sortierparameters sortiert und in wenigstens zwei parallele Sortierreihenfolgen (10) von Packstücken (2) aufgeteilt werden, dass die Packstücke (2) der parallelen Sortierreihenfolgen (10) nacheinander gemäß den Sortierparametern mit wenigstens einem gemeinsamen Roboter (11) in wenigstens eine Transporteinheit (12) verladen werden, dass eine Steuereinrichtung (6) anhand des wenigstens einen Sortierparameters der Packstücke (2) der wenigstens zwei parallelen Sortierreihenfolgen (10) und, vorzugsweise, anhand wenigstens eines Beladezustands der wenigstens einen Transporteinheit (12), eine optimierte Beladereihenfolge für den wenigstens einen gemeinsamen Roboter (11) ermittelt und dass die Packstücke (2) gemäß der optimierten Beladereihenfolge von dem wenigstens einen gemeinsamen Roboter (11) in die wenigstens eine Transporteinheit (12) verladen werden.

## Beschreibung

Die Erfindung betrifft ein Verfahren zum Umverteilen von Packstücken in einer Sortierstation.

Verfahren zum Umverteilen von Packstücken in Sortierstationen sind in unterschiedlichen Ausgestaltungen bekannt. Prinzipiell werden in vielen dieser Verfahren der Sortierstation Packstücke gebündelt Transporteinheiten zugeführt, bei denen es sich beispielsweise um Aufbauten von Lastkraftwagen oder Anhängern handeln kann. Diese Transporteinheiten werden dann entladen und vereinzelt einem Förderband übergeben. Die Packstücke können dann gescannt werden, wobei ein Sortierparameter erfasst wird, nach dem die Packstücke sortiert werden. Je nach dem Sortierparameter werden die Packstücke dann auf unterschiedliche Transporteinheiten verteilt, mit denen die Packstücke dann aus der Sortierstation abtransportiert werden. In vielen Fällen handelt es sich bei diesen Transporteinheiten, anders als bei den Transporteinheiten, die in der Sortierstation entladen werden, um Rollbehälter, Gitterboxen, Paletten, Paletten mit Wänden oder Unit Load Devices (ULD). Unit Load Devices sind Paletten und Container, die zum Beladen von Flugzeugen verwendet werden und daher an die Abmessungen von Flugzeugrümpfen angepasst sind.

Die Packstücke können nach dem Scannen in einem Zwischenspeicher, etwa einem Regallager oder dergleichen, bis zum Weitertransport der Packstücke zwischengespeichert werden. Aus dem Zwischenspeicher können die Packstücke dann in einer bestimmten oder beliebigen Reihenfolge entnommen werden. Um eine hohe Effizienz und eine geringe Verweilzeit der Packstücke in der Sortierstation zu erreichen, wird aber oft auf das Zwischenspeichern der Packstücke verzichtet. Die Packstücke werden mit Förderbändern oder dergleichen vom Ort des Entladens aus Transporteinheiten zum Ort des Verladens in andere Transporteinheiten gefördert und dabei sortiert. Denkbar ist beispielsweise, dass die Packstücke teilweise von einem Laufband auf ein anderes Laufband oder in eine Rutsche verschoben werden, um die Packstücke zu sortieren. Es gibt dann bedarfsweise eine Transportreihenfolge, in der die Packstücke transportiert, gescannt und einer Sortiereinrichtung zugeführt werden. Nach dem Sortieren bilden die Packstücke wenigstens zwei Sortierreihenfolgen. Jede Sortierreihenfolge enthält typischerweise Packstücke mit einem anderen Sortierparameter. Jede Sortierreihenfolge wird unterschiedlichen Transporteinheiten zugeführt, in welche die Packstücke bedarfsweis von einem Roboter eingebracht werden.

Um den in den Transporteinheiten zur Verfügung stehenden Platz effizient nutzen zu können, werden in einigen Fällen auch Größenmaße der Packstücke erfasst. Ein Beladungsalgorithmus kann dann vorgeben, wo bestimmte Packstücke in die Transporteinheiten gestapelt werden sollten, um wenig Platz zu verschenken. Unterstützend können die aktuellen Beladesituationen der Transporteinheiten mit Sensoren überwacht werden. Werden die Packstücke in der Sortierstation zwischengespeichert, können die Packstücke in einer Reihenfolge aus dem Zwischenspeicher entnommen werden, in der die Packstücke platzsparend gestapelt werden können.

Das Beladen von Transporteinheiten mit sortierten Packstücken in Sortierstationen mit Hilfe von Robotern erreicht trotz der technischen Hilfsmittel keine zufriedenstellende Effizienz. In vielen Fällen ist das händische Verladen schneller und genauer. Das händische Verladen erlaubt jedoch keine Automatisierung. In anderen Fällen wird trotz eines hohen technischen Aufwands beim Verladen noch viel Platz in den Transporteinheiten verschenkt.

Daher liegt der vorliegenden Erfindung die Aufgabe zugrunde, das Verfahren der eingangs genannten und zuvor näher erläuterten Art derart auszugestalten und weiterzubilden, dass die Effizienz von Sortierstationen mit vertretbarem Aufwand weiter gesteigert werden kann.

Diese Aufgabe ist gemäß Anspruch 1 gelöst durch ein Verfahren zum Umverteilen von Packstücken in einer Sortierstation,
- bei dem die Packstücke in wenigstens einer Transportreihenfolge zum Erfassen jeweils wenigstens eines Sortierparameters nacheinander gemäß der wenigstens einen Transportreihenfolge gescannt werden,
- bei dem die gescannten Packstücke in der wenigstens einen Transportreihenfolge in einer Sortiereinrichtung anhand des wenigstens einen Sortierparameters sortiert und in wenigstens zwei parallele Sortierreihenfolgen von Packstücken aufgeteilt werden,
- bei dem die Packstücke der parallelen Sortierreihenfolgen nacheinander gemäß den Sortierparametern mit wenigstens einem gemeinsamen Roboter in wenigstens eine Transporteinheit verladen werden,
- bei dem eine Steuereinrichtung anhand des wenigstens einen Sortierparameters der Packstücke der wenigstens zwei parallelen Sortierreihenfolgen und, vorzugsweise, anhand wenigstens eines Beladezustands der wenigstens einen Transporteinheit, eine optimierte Beladereihenfolge für den wenigstens einen gemeinsamen Roboter ermittelt und
- bei dem die Packstücke gemäß der optimierten Beladereihenfolge von dem wenigstens einen gemeinsamen Roboter in die wenigstens eine Transporteinheit verladen werden.

Verfahrensmäßig können die Packstücke aus einer Transporteinheit entladen und sodann in eine Transportreihenfolge überführt werden, etwa wenn eine Lieferung von mittels einer Transporteinheit an eine Sortierstation herantransportierten Packstücken umverteilt und sortiert werden muss. Umverteilen kann dabei bedeuten, dass die Packstücke aus einer Transporteinheit auf unterschiedliche Transporteinheiten verteilt werden. Dies muss aber nicht der Fall sein. Die Transportreihenfolge kann unabhängig von einer Anlieferung der Packstücke in einer gemeinsamen Transporteinheit gebildet werden. Denkbar ist es beispielsweise auch, dass die Packstücke einer Transporteinheit lediglich in einer anderen Reihenfolge oder Anordnung in eine andere Transporteinheit umgepackt werden oder dass die Transportreihenfolge aus in der Sortierstation zwischengespeicherten Packstücken gebildet wird.

Die Packstücke wenigstens einer gegebenen Transportreihenfolge werden gescannt, um auf diese Weise nacheinander jeweils wenigstens ein Sortierparameter der Packstücke in der Transportreihenfolge zu ermitteln. Die gescannten Packstücke der Transportreihenfolge können dann in einer Sortiereinrichtung anhand des wenigstens einen Sortierparameters der Packstücke sortiert werden, wobei die Sortierung dergestalt erfolgt, dass die Packstücke der Transportreihenfolge in wenigstens zwei parallele Sortierreihenfolgen von Packstücken aufgeteilt werden. Die parallelen Sortierreihenfolgen werden dabei nicht genutzt, um die Packstücke einer Sortierreihenfolge in wenigstens eine Transporteinheit und die Packstücke einer anderen Sortierreihenfolge in wenigsten eine andere Transporteinheit zu verladen. Vielmehr werden die Packstücke der parallelen Sortierreihenfolgen nacheinander gemäß den Sortierparametern mit wenigstens einem gemeinsamen Roboter gemeinsam in wenigstens eine Transporteinheit verladen. Durch das Verladen entsteht eine Transporteinheit oder eine Reihe von Transporteinheiten, in die von dem wenigstens einen gemeinsamen Roboter Packstücke aus unterschiedlichen Sortierreihenfolgen verladen worden sind. Die Sortierreihenfolgen werden vorzugsweise in der Sortiereinrichtung aus separaten Förderbändern erzeugt, welche die Packstücke zu dem wenigstens einen gemeinsamen Roboter transportieren können.

Damit das Verladen effektiv und/oder nach gewünschten Vorgaben erfolgt, erfolgt das Verladen gesteuert durch eine Steuereinrichtung, welche Kenntnis über die Sortierparameter der Packstücke und die Anordnung der Packstücke in den wenigstens zwei parallelen Sortierreihenfolgen hat. Beispielsweise kann der Sortiereinrichtung der wenigstens eine Sortierparameter der Packstücke der Transportreihenfolge übermittelt werden, so dass die Steuereinrichtung das Sortieren der Packstücke steuern kann und der Steuereinrichtung bekannte Reihenfolgen von Packstücken in den Sortierreihenfolgen erzeugt, wobei die Packtücke der Transportreihenfolge von der Steuereinrichtung jeweils aufgrund des wenigstens einen Sortierparameters einer Sortierreihenfolge der wenigstens zwei Sortierreihenfolgen zugeordnet werden.

Die Steuereinrichtung kann dann unter Berücksichtigung der Sortierparameter der Packstücke der wenigstens zwei parallelen Sortierreihenfolgen und der Anordnung der Packstücke in den Sortierreihenfolgen ermitteln, in welcher Beladereihenfolge die Packstücke der Sortierreihenfolgen von wenigstens einem gemeinsamen Roboter in die wenigstens eine Transporteinheit verladen werden sollten. Unter einem gemeinsamen Roboter wird dabei ein solcher verstanden, der Packstücke von den wenigstens zwei parallelen Sortierreihenfolgen entnehmen kann. Dabei kann es sich immer um die jeweils vordersten Packstücke in den Sortierreihenfolgen handeln. Es ist aber auch denkbar, dass der gemeinsame Roboter bestimmte Packstücke aus den Sortierreihenfolgen zum Verladen entnehmen kann, bei denen es sich nicht jeweils um die vordersten Packstücke der Sortierreihenfolgen handelt. Dazu kann beispielsweise der gemeinsame Roboter entlang der Sortierreihenfolgen und/oder die Sortierreihenfolgen entlang des wenigstens einen gemeinsamen Roboters verfahren werden. In einem solchen Fall kann der Roboter sehr flexibel zum Verladen aus vielen verschiedenen Packstücken jeder oder bestimmter Sortierreihenfolgen auswählen.

Da der wenigstens eine gemeinsame Roboter aus den Packstücken der parallelen Sortierreihenfolgen auswählen kann, kann die Beladereihenfolge auf einfache Weise optimiert werden. Dabei bedeutet optimiert nicht unbedingt, dass ein Optimum erreicht wird. Es reicht aus, wenn die Beladereihenfolge auf diese Weise deutlich verbessert werden kann. Um dies zu unterstützen, kann bei einer bevorzugten Ausgestaltung des Verfahrens auch ein Beladezustand wenigstens einer Transporteinheit beim Erzeugen einer optimierten Beladereihenfolge für den wenigstens einen gemeinsamen Roboter berücksichtig werden. Letztlich werden die Packstücke dann gemäß der optimierten Beladereihenfolge von dem wenigstens einen gemeinsamen Roboter in die wenigstens eine Transporteinheit verladen. Dadurch können die Packstücke beispielsweise platzsparend und/oder beschädigungsfrei in die Transporteinheiten verladen werden, wenn die Steuereinrichtung die Beladereihenfolge der Packstücke basierend auf den Sortierparametern der Packstücke dahingehend optimiert. Dadurch kann die Effizienz sowohl der Sortierstation als auch des Verfahrens zum Umverteilen von Packstücken in einer Sortierstation gesteigert werden, ohne dass dazu unverhältnismäßige Aufwände erforderlich sind.

Die Packstücke können an der Sortierstation gebündelt in separaten Transporteinheiten angeliefert werden, bei denen es sich beispielsweise um Aufbauten von Lastkraftwagen oder Anhängern handeln kann. Die Packstücke sind darin typischerweise gestapelt enthalten und bilden dabei ein Bündel von Packstücken, in dem die Packstücke keine bestimmte Reihenfolge aufweisen. Die Transporteinheiten können dann in der Sortierstation entladen werden, wobei das Entladen von mehreren Transporteinheiten vorzugsweise nacheinander erfolgen wird. Dies schließt aber nicht aus, dass das Entladen von separaten Transporteinheiten parallel zueinander erfolgen kann. Die Packstücke werden beim Entladen vereinzelt und dabei, etwa von wenigstens einem Förderband, nacheinander in wenigstens einer Transportreihenfolge an einer Scanneinrichtung vorbeigeführt. Die in der wenigstens einen Transporteinrichtung zur Scanneinrichtung transportierten Packstücke werden gescannt, wobei jeweils wenigstens ein Größenmaß und ein Sortierparameter der Packstücke erfasst wird.

Die nachfolgende Sortierung der Packstücke erfolgt dabei auf der Grundlage dieses wenigstens einen Sortierparameters. Der Sortierparameter kann beispielsweise eine Zielinformation enthalten, wohin das jeweilige Packstück zu transportieren ist, etwa eine Postleitzahl oder dergleichen. Beim Sortieren müssen nicht zwingend Packstücke mit gleichen Sortierparametern zusammengefasst werden. Es können auch Packstücke mit Sortierparametern zusammengefasst werden, die in einem vorgegebenen Wertebereich liegen, etwa im Sinne von Postleitzahlbereichen. Durch das Sortieren der Packstücke in der Sortiereinrichtung wird die Transportreihenfolge der Packstücke in wenigstens zwei separate Sortierreihenfolgen von Packstücken aufgeteilt. Je nach der Anzahl an Kriterien, nach denen sortiert wird, ergeben sich beim Sortieren mehr oder weniger separate Sortierreihenfolgen.

Die Packstücke der verschiedenen Sortierreihenfolgen werden in gemeinsame Transporteinheiten verladen, wobei sie wieder miteinander vermischt werden können. Das Verladen der Packstücke erfolgt entsprechend der jeweiligen von der Steuereinrichtung vorgegebenen Beladereihenfolge. Der Roboter verlädt die Packstücke mithin nacheinander in der Beladereihenfolge. Die Beladereihenfolge kann grundsätzlich umso zweckmäßiger zusammengestellt werden, je mehr parallele Sortierreihenfolgen für den wenigstens einen gemeinsamen Roboter aus der Transportreihenfolge an Packstücken erzeugt werden. Ist eine Transporteinheit auf die beschriebene Weise beladen, kann anschließend in gleicher Weise eine weitere Transporteinheit beladen werden, beispielsweise so lange, bis alle Packstücke der Transportreihenfolge in Transporteinheiten verladen sind.

Unter Packstücken können grundsätzlich Stückgüter unterschiedlicher Art verstanden werden. Es können aber auch Stückgüter einer besonderen Art gemeint sein, etwa mit Packungen verpackte Waren. Packstücke können mithin wenigstens eine Umverpackung aus Papier, Pappe, Gewebe oder Kunststoff aufweisen und beispielsweise als Pakete, Kisten und Behälter sowie als nicht formstabile Gebinde wie Tüten, Beutel oder Säcke vorliegen. Die in Packstücken verpackten Waren können selbst einzelne Stückgüter, Schüttgüter, Flüssigkeiten oder pastöse Materialien sein.

Bei einer ersten besonders bevorzugten Ausgestaltung des Verfahrens werden von jeweils wenigstens einem gemeinsamen Roboter die Packstücke von separaten parallelen Sortierreihenfolgen nacheinander gemäß den Sortierparametern der Packstücke jeweils der separaten parallelen Sortierreihenfolgen in jeweils wenigstens eine unterschiedliche Transporteinheit verladen. Das Verfahren kann also erweitert werden, indem mehrere parallele Sortierreihenfolgen in der Sortiereinrichtung erzeugt werden. Den unterschiedlichen parallelen Sortierreihenfolgen ist dann jeweils wenigstens ein Roboter zugeordnet, wobei einer der Roboter Packstücke von bestimmten parallelen Sortierreihenfolgen verlädt und ein anderer Roboter Packstücke von anderen parallelen Sortierreihenfolgen verlädt. Vereinfacht gesprochen kann das vorstehend beschriebene Verfahren auf diese Weise dupliziert oder multipliziert werden, was zu einem höheren Durchsatz und einer höheren Effizienz führen kann.

Um das Beladen der Transporteinheiten weiter zu optimieren, kann es sich anbieten, wenn der Beladezustand der wenigstens einen Transporteinheit während des Verladens der Packstücke mittels wenigstens eines, insbesondere optischen, Sensors ermittelt und zur Optimierung der Beladereihenfolge an die Steuereinrichtung weitergegeben wird. Es kann dann anhand des ermittelten Beladezustands beispielsweise ermittelt werden, ob ein bestimmtes Packstück noch in einen bestimmten Freiraum in der Transporteinheit verladen werden kann, oder ob besser ein anderes Packstück in den Freiraum verladen werden sollte. Das andere Packstück kann etwa anders als das eine Packstück überhaupt in den Freiraum hineinpassen. Das andere Packstück kann aber bedarfsweise auch den Freiraum besser ausfüllen als das eine Packstück. So lässt sich eine recht dichte Packung an Packstücken in der Transporteinheit sicherstellen. Es kann aber durch die Überwachung des Beladezustands auch festgestellt werden, ob die Transporteinheit bereits schon fast voll beladen ist, so dass nun noch Packstücke verladen werden können, die leicht beschädigt werden könnten, wenn sie weiter unten in der Transporteinheit aufgenommen wären.

Der wenigstens eine Sortierparameter kann mittels einer geeigneten, insbesondere optischen, Scanneinrichtung erfasst werden. Um bestimmte Sortierparameter einfach, schnell und zuverlässig scannen zu können, kann es sich anbieten, wenn der wenigstens eine Sortierparameter der Packstücke mittels eines Sechsseiten-Scanners und/oder eines Linienscanners, insbesondere eines RGB-Linienscanners und/oder eines Volumenscanners, gescannt wird. Der Sechsseiten-Scanner scannt die Packstücke jeweils aus allen sechs Raumrichtungen, so dass die tatsächlichen Größenmaße sehr genau erfasst werden können. Je genauer die Abmessungen bekannt sind, umso effektiver können die Sortierreihenfolgen optimiert werden. Entsprechende Scanner der genannten Arten sind prinzipiell aus ähnlichen Anwendungen bekannt. Sechsseiten-Scanner erlauben auch zuverlässig Sortierparameter wie beispielsweise Postleitzahlen oder andere aufgedruckte Informationen zu erfassen.

Ein Sechsseiten-Scanner kann bevorzugt von allen sechs Seiten des Packstücks jeweils ein Bild aufnehmen, wobei sich dann die Pixel der Bilder auswerten lassen. Beispielsweise können die zu einem Packstück gehörigen Pixel gezählt und daraus die Größenabmessungen des Packstücks ermittelt werden, insbesondere wenn zuvor eine Kalibrierung in Bezug auf das Verhältnis von Pixelzahlen und Größenabmessungen erfolgt ist. In einem einfacheren Fall kann auch ein Linienscanner verwendet werden, an dem die Packstücke vorbei transportiert werden. Der Linienscanner scannt dabei eine Seite des Packstücks, etwa von oben, und nimmt dabei zeilenweise Bilder auf. Die Pixel jeder Zeile können dann gegen die Zeit bzw. die Anzahl der Zeilen hintereinander aufgetragen werden, wodurch man Bilder aus einer Vielzahl von einzelnen Zeilen und damit letztlich Pixelflächen erhält, die mit den Größenabmessungen der Packstücke korrelieren. Nach einer entsprechenden Kalibrierung kann die Pixelfläche einer Größe des Packstücks aus der entsprechenden Blickrichtung zugeordnet werden. Besonders bevorzugt sind in diesem Zusammenhang RGB-Scanner, wobei als RGB ein Farbraum bezeichnet wird, der mittels der Farben rot, grün und blau, also den Primärfarben des Lichts, gebildet wird. Vereinfacht gesprochen erfasst der Linienscanner die Farben rot, grün und blau. Im Gegensatz zu den Linienscannern erlauben Sechsseiten-Scanner die Ermittlung eines Volumens oder einer dreidimensionalen Form des Packstücks. Bedarfsweise können aber alternativ oder zusätzlich auch sogenannte Volumenscanner eingesetzt werden, die meist Laser einsetzen. Die Volumenscanner können zudem als Linienscanner ausgebildet sein, an denen die Packstücke dann vorbeitransportiert werden. Der Vorteil dieser Scanner besteht darin, dass aus einer mittels eines entsprechenden Detektors aufgefangenen Punktewolle des Lasers auf die dreidimensionale Form der Packstücke geschlossen werden kann. Typischerweise wird die auf einem Förderband aufliegende Seite eines Packstücks nicht gescannt, was aber regelmäßig in Kauf genommen werden kann. Meist werden die Packstücke von einer Seite, insbesondere wenigstens im Wesentlichen von oben, mit dem Laser beaufschlagt.

Bei der Verwendung eines Sechsseiten-Scanners, eines Volumenscanners, eines Linienscanners, insbesondere RGB-Linienscanners, und/oder anderer geeigneter Scanneinrichtungen bietet es sich an, wenigstens zwei, insbesondere wenigstens drei, Größenparameter von jedem Packstück zu scannen. Bei diesen kann es sich um die Höhe, die Breite und/oder die Länge der Packstücke handeln. In einigen Fällen kann es weiter bevorzugt sein, konkret die maximale Höhe, die maximale Breite und/oder die maximale Länge der Packstücke zu erfassen. Wenn die Abmessungen in mehreren Dimensionen bekannt sind, kann von der Steuereinrichtung zuverlässiger eine tatsächlich platzsparende Verladung berechnet werden. Dies führt zu besser optimierten Sortierreihenfolgen der Packstücke zum Verladen in die Transporteinheiten, was insbesondere dann gilt, wenn die Packstücke sehr unterschiedliche Abmessungen aufweisen können.

Neben dem Scannen von Größenmaßen in Form reiner Abmessungen, kann es sich alternativ oder zusätzlich anbieten, wenn die Form und/oder die Oberfläche der Packstücke gescannt wird. Dies bietet sich insbesondere dann an, wenn die Packstücke nicht oder nicht immer quaderförmig oder sehr dünn oder sehr flexibel sind. Bei nicht quaderförmigen Packstücken kann eine andere relative Anordnung zueinander platzsparender sein als bei in etwa gleichgroßen quaderförmigen Packstücken. Ist der Steuereinrichtung die Form und/oder die Oberfläche der Packstücke bekannt, kann von der Steuereinrichtung anhand der gescannten Form und/oder der Oberfläche der Packstücke ermittelt werden, ob es sich bei der Form um wenigstens eine vorbestimmte Sonderform der Packstücke handelt.

Die Steuereinrichtung kann das Handling der Sonderformen nach anderen Kriterien vorgeben als rein nach den Größenmaßen und/oder den Sortierparametern. Das Scannen einer Oberfläche erfolgt dabei bevorzugt durch Aufnehmen eines Bilds von wenigstens einer Oberfläche. Es kann hier beispielsweise wenigstens ein Bild eines Sechsseiten-Scanners oder wenigstens ein von einem Linienscanner zeilenweise zusammengesetztes Bild der Oberfläche genutzt werden. Eine Auswertung betreffend die Oberfläche kann dann beispielsweise anhand der Farbverläufe oder der Grauwertverteilungen erfolgen.

Beispielsweise kann vorgegeben werden, dass bestimmte Sonderformen aus der Reihenfolge der Packstücke ausgeschleust werden. Die Sonderformen können dann aus der, insbesondere vorläufigen, Transportreihenfolge, und/oder aus der, insbesondere vorläufigen, Sortierreihenfolge ausgeschleust werden. Ein Ausschleusen nach der Sortiereinrichtung erfordert einen längeren Transport in der Sortierstation. Dann ist die Sonderform jedoch nach dem wenigstens einen Sortierparameter sortiert worden, was für den weiteren Umgang mit den Packstücken nützlich sein kann. Die Packstücke mit den Sonderformen können in andere Transporteinheiten verladen werden als die nicht die wenigstens eine Sonderform aufweisenden Packstücke. Es kann sich dabei um separate Transporteinheiten handeln, die lediglich für das Verladen von Sonderformen vorgesehen sind. Alternativ oder zusätzlich können die Sonderformen zum händischen Verladen vorgesehen sein. Das Verladen in Transporteinheiten erfolgt dann nicht über einen Roboter. In diesem Zusammenhang kommen als Sonderformen beispielsweise solche in Frage, die nicht oder nur schwer von einem Roboter gehandhabt bzw. verladen werden können. Der wenigstens eine vorhandene Roboter wird folglich nicht durch solche Packstücke mit Sonderformen blockiert. Packstücke mit Sonderformen erreichen in diesem Fall den Roboter erst gar nicht und werden an anderer Stelle händisch verladen. Alternativ oder zusätzlich können Packstücke mit bestimmten Sonderformen auch zu separaten Sortierreihenfolgen zusammengefasst werden.

Die Steuereinrichtung kann anhand des wenigstens einen Größenparameters, der Form und/oder der Oberfläche der Packstücke ermitteln, ob es sich bei der Form um wenigstens eine vorbestimmte Sonderform der Packstücke handelt oder nicht. Wenn es sich um eine Sonderform der Packstücke handelt, die zuvor unter Rückgriff auf Größenparameter, Formen und/oder Oberflächen definiert worden sind, so können die Packstücke mit Sonderformen in separate Sortierreihenfolgen sortiert werden. Dies bietet den Vorteil, dass bestimmte Sonderformen in jeweils bevorzugter Weise verladen werden können. Besonders große und sperrige Packstücke werden beispielweise eher weiter unten in der Transporteinheit verladen als weiter oben. Dies gilt grundsätzlich auch für besonders schwere Packstücke. Besonders fragile Packstücke werden dagegen besser weit oben in der Transporteinheit platziert als weiter unten. Besonders geformte Packstücke können eventuell zweckmäßig nebeneinander in der Transporteinrichtung platziert werden, während Packstücke mit anderen Formen an bestimmten Stellen in der Transporteinheit positioniert werden, beispielsweise in Ecken der Transporteinheit.

Um eine platzsparende Beladung der Transporteinheiten zu ermöglichen oder sehr zuverlässig zwischen unterschiedlichen Artikelklassen der Packstücke zu unterscheiden, kann es sich anbieten, wenn von der Steuereinrichtung anhand des wenigstens einen Größenparameters, der Form und/oder der Oberfläche der Packstücke elektronische 3D-Modelle der Packstücke erzeugt werden. Diese Vorteile können besonders zweckmäßig genutzt werden, wenn die Steuereinrichtung die Packstücke wenigstens auch anhand der elektronischen 3D-Modelle der Packstücke unterschiedlichen Sortierreihenfolgen zuweist. In den Sortierreihenfolgen können also bedarfsweise Packstücke mit ähnlichen 3D-Modellen zusammengefasst werden.

Für die Sortierung oder die Beladereihenfolgen kann es auch zweckmäßig sein, wenn das Gewicht der Packstücke bekannt ist. Daher ist vorzugsweise der wenigstens eine Sortierparameter der Packstücke wenigstens ein Gewicht der Packstücke. Das Gewicht kann bedarfsweise zeitgleich mit dem Scannen anderer Sortierparameter erfasst werden. Das Wiegen und das Scannen anderer Sortierparameter kann aber auch nacheinander erfolgen. Wenn das Gewicht bekannt ist, können Packstücke bestimmter Gewichtsklassen in separate Sortierreihenfolgen sortiert werden. Zwingend ist dies aber nicht. Es kann ausreichen, wenn die Gewichte der Packstücke bekannt sind, um eine geeignete Beladereihenfolge zu ermitteln.

Wenn wenigstens ein Größenparameter, die Form, die Oberfläche und/oder das Gewicht der Packstücke bekannt ist, kann die Steuereinrichtung anhand des wenigstens einen Sortierparameters der Packstücke auf Artikelklassen der Packstücke schließen. Beispielsweise können Pakete, Tüten, Umschläge und Taschen unterschiedliche Artikelklassen darstellen. Sind Zuordnungen der Packstücke zu unterschiedlichen Artikelklassen bekannt, können die Packstücke von der Steuereinrichtung wenigstens auch anhand der Artikelklassen der Packstücke unterschiedlichen Sortierreihenfolgen zugewiesen werden.

Unabhängig davon kann wenigstens eine Artikelklasse der Packstücke von dem wenigstens einen gemeinsamen Roboter nicht handhabbare Packstücke umfassen. Bei diesen Packstücken kann es sich um solche handeln, die zu groß, nicht richtig geformt, zu schwer und/oder nicht steif genug sind. In diesem Fall kann wenigstens eine Sortierreihenfolge bedarfsweise, insbesondere ausschließlich, Packstücke einer solchen Artikelklasse umfassen. Die entsprechende Sortierreihenfolge kann dann bedarfsweise von Hand in wenigstens eine Transporteinheit verladen werden.

Um die Packstücke in der wenigstens einen Transporteinheit in einer besonders geeigneten Weise anzuordnen, bietet es sich an, dass der gemeinsame Roboter nacheinander Packstücke von unterschiedlichen Sortierreihenfolgen der wenigstens zwei parallelen Sortierreihenfolgen entnimmt und diese in der entsprechenden Weise nacheinander in die Transporteinheit verlädt. Dies ist besonders einfach und schnell möglich, wenn von dem gemeinsamen Roboter jeweils die vordersten Packstücke der Sortierreihenfolgen entnommen werden. Dies ist aber nicht erforderlich, wenn von dem gemeinsamen Roboter von den zugehörigen parallelen Sortierreihenfolgen auch andere als die jeweils letzten Packstücke entnommen werden können, so besteht eine deutlich größere Flexibilität beim Beladen der wenigstens einen Transporteinheit. Im Ergebnis kann eine noch geeignetere Beladereihenfolge erzeugt werden. Die Flexibilität für das Beladen durch den wenigstens einen gemeinsamen Roboter kann alternativ oder zusätzlich auch dadurch gesteigert werden, dass immer mehrere Transporteinheiten von dem wenigstens einen gemeinsamen Roboter beladen werden. Ein Packstück, das nicht oder nur bedingt in eine Transporteinheit verladen werden könnte, kann bedarfsweise viel zweckmäßiger in eine andere Transporteinheit verladen werden. Der Roboter kann sich also nicht nur jeweils als nächstes ein geeignetes Packstück für die Beladereihenfolge, sondern auch jeweils eine geeignete Transporteinheit zum Beladen des nächsten Packstücks aussuchen. Unabhängig davon bietet es sich an, wenn die Beladereihenfolge von der Steuereinrichtung anhand des wenigstens einen Sortierparameters und der wenigstens zwei parallelen Sortierreihenfolgen vorgegeben wird. Alternativ oder zusätzlich kann die Steuereinrichtung anhand des wenigstens einen Sortierparameters und der wenigstens zwei parallelen Sortierreihenfolgen vorgeben, welches Packstück der Beladereihenfolge in welches von mehreren Transporteinheiten verladen wird.

Für ein effizientes und zweckmäßiges Verfahren kann es sich anbieten, wenn die Steuereinrichtung die Beladereihenfolge der Packstücke wenigstens teilweise hinsichtlich einer platzsparenden Verladung der Packstücke in die wenigstens eine Transporteinheit vorgibt. Es wird dadurch vermieden, dass übermäßig viel ungenutzter Raum in den Transporteinheiten verbleibt, der bei Verwendung einer anderen Beladereihenfolge weitere Packstücke hätte aufnehmen können.

Unabhängig davon kann es sich zur Schonung der Packstücke anbieten, wenn die Steuereinrichtung die Beladereihenfolge der Packstücke wenigstens teilweise hinsichtlich der Stapelbarkeit der Packstücke in der wenigstens einen Transporteinheit vorgibt. Die Stapelbarkeit kann auch eine platzsparende Verladung der Packstücke berücksichtigen, insbesondere kann die Stapelbarkeit der Packstücke von der Steuereinrichtung aber anhand des Gewichts, der Formstabilität und/oder der Widerstandsfähigkeit der Packstücke abgeschätzt werden. Die Stapelbarkeit kann mithin einfach und zweckmäßig von der Steuereinrichtung basierend auf dem wenigstens einen Sortierparameter abgeschätzt werden.

Die Vorteile des beschriebenen Verfahrens können in besonders zweckmäßiger Weise genutzt werden, wenn die Packstücke aus Transporteinheiten in Form von Nutzfahrzeugaufbauten, vorzugsweise Kofferaufbauten, insbesondere eines Lastkraftwagens, Anhängers oder Sattelaufliegers entladen werden. Alternativ oder zusätzlich kann es sich aber auch anbieten, wenn die Packstücke aus Transporteinheiten in Form von nicht selbst angetriebenen Niederflurfahrzeugen, insbesondere in Form von Rollwagen, Gitterboxen oder Unit Load Devices (ULD) entladen werden. Bei entsprechenden Verfahren werden viele große Packstücke in sehr kurzer Zeit verteilt, weshalb eine Optimierung des Platzes in den Transporteinheiten wünschenswert und zugleich schwierig ist.

Alternativ oder zusätzlich ist es aus den gleichen Gründen bevorzugt, wenn die Packstücke in nicht selbst angetriebene Niederflurfahrzeuge, insbesondere in Form von Rollwagen, Gitterboxen oder Unit Load Devices (ULD) verladen werden. Unit Load Devices sind Paletten und Container, die zum Beladen von Flugzeugen verwendet werden und daher an die Abmessungen von Flugzeugrümpfen angepasst sind.

Hinsichtlich der Packstücke bietet sich das beschriebene Verfahren an, wenn die Packstücke umverpackte Stückgüter, insbesondere jeweils mit einem Karton umverpackte Stückgüter sind. Besonders zweckmäßig ist es dabei, wenn die Stückgüter Pakete, Tüten, Umschläge, Beutel und/oder Taschen sind. Diese Packstücke sind in Sortieranlagen in großer Zahl und bei kurzer Verweilzeit zu sortieren und zu verteilen.

Nachfolgend wird die Erfindung anhand einer lediglich eine Ausführungsform darstellenden Zeichnung näher erläutert. In der Zeichnung zeigt
- Fig. 1: eine Sortierstation zum erfindungsgemäßen Umverteilen von Packstücken in einer Draufsicht von oben und
- Fig. 2: das Verladen von Packstücken einer optimierten Beladereihenfolge mit einem Roboter der Sortierstation aus Fig. 1 in einer Seitenansicht.

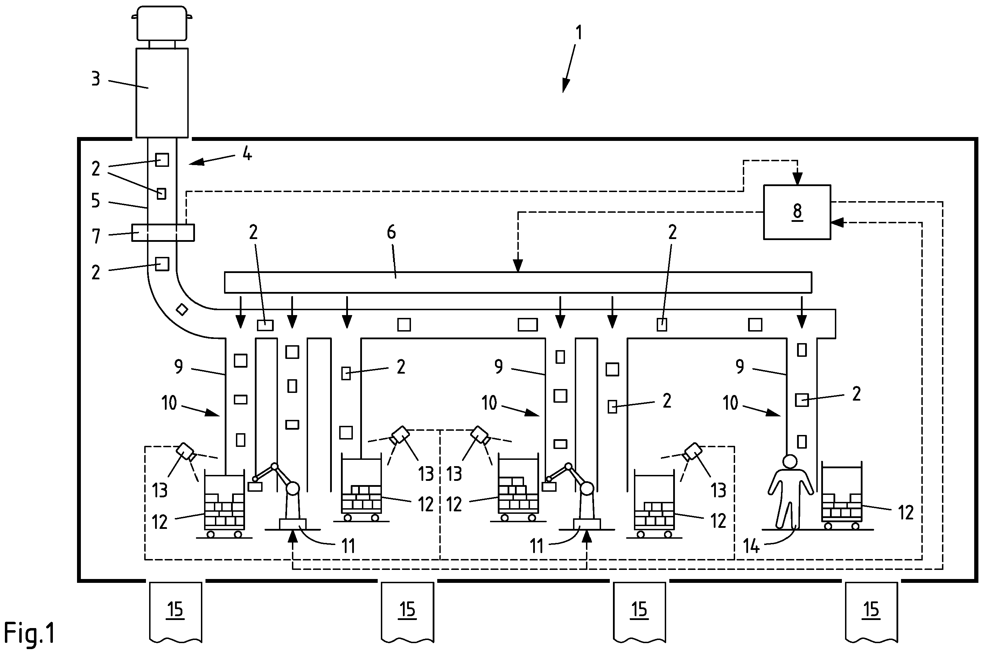

In der Fig. 1 ist eine Sortierstation 1 zum Umverteilen von Packstücken 2 dargestellt. Bei den Packstücken 2 kann es sich beispielsweise um Stückgüter, Pakete, Umschläge, Tüten und/oder Säcke handeln. Die Packstücke 2 werden mit Transporteinheiten 3 in Form von Nutzfahrzeugen, insbesondere Lastkraftwagen, Anhängern und/oder Sattelaufliegern an die Sortierstation 1 herangefahren, wobei sich die Packstücke 2 in den Aufbauten der Nutzfahrzeuge befinden. An der Sortierstation 1 angekommen werden die Packstücke 2 entladen und dabei vereinzelt. Beim dargestellten und insoweit bevorzugten Verfahren wird aus den entladenen Packstücken 2 eine einzige Transportreihenfolge 4 von Packstücken 2 erzeugt. Die Transportreihenfolge 4 wird, insbesondere wenigstens im Wesentlichen stetig, mit wenigstens einem Förderband 5 durch die Sortierstation 1 bis zu einer Sortiereinrichtung 6 transportiert. Bedarfsweise können auch mehrere Transportreihenfolgen 4 erzeugt werden, die dann parallel in der Sortierstation 1 gehandhabt werden können.

Die Transportreihenfolge 4 der Packstücke 2 wird einer Scanneinrichtung 7 zugeführt, in der von jedem Packstück 2 wenigstens ein Sortierparameter, insbesondere eine Postleitzahl und eine Größenabmessung, erfasst wird. Zudem werden das Gewicht, die Form und die Oberfläche der Packstücke 2 erfasst. Dies ist jedoch nicht zwingend. Bei dem dargestellten uns insoweit bevorzugten Verfahren werden die Packstücke 2 durch einen Sechsseiten-Scanner der Scanneinrichtung 7 transportiert, wobei die Packstücke 2 jeweils von allen sechs Seiten gescannt werden. Es wird dabei eine Zielinformation wie eine Postleitzahl ausgelesen, die für das anschließende Sortieren der Packstücke 2 als Sortierparameter relevant ist. Es werden auch die Größenabmessungen Länge, Höhe und Breite, sowie die Form und die Oberfläche der Packstücke 2 erfasst. Zudem wird bei Durchtritt durch die Scanneinrichtung 7 das Gewicht der Packstücke 2 ermittelt, sofern dies zweckmäßig erscheint.

Die Reihenfolge der Packstücke 2, die den Packstücken 2 zugeordneten Sortierparameter, die Größenabmessungen, die Formen, Oberflächen und Gewichte werden an eine Steuereinrichtung 8 übermittelt. Die Packstücke 2 werden von der Scanneinrichtung 7 zur Sortiereinrichtung 6 transportiert, wo die Packstücke 2 entsprechend des Sortierparameters auf unterschiedliche Förderbänder 9 verteilt und dort in Sortierreihenfolgen 10 angeordnet werden. Dies erfolgt gesteuert durch die Steuereinrichtung 8 anhand der Transportreihenfolge 4 der Packstücke 2 und den der Packstücke 2 zugeordneten Sortierparametern. Zum Sortieren der Packstücke 2 können diese zunächst der Transportreihenfolge 4 nach auf Wippen überführt werden, welche die Packstücke 2 an den weiteren Förderbändern 9 vorbei transportieren und die Packstücke 2 jeweils nach den Sortierparametern auf die den Sortierparametern zugewiesenen Förderbänder 9 kippen. Alternativ können die Packstücke 2 auch aktiv von der Sortiereinrichtung 6 auf die dem Sortierparameter zugeordneten Förderbänder 9 verschoben werden. Andere Arten des Sortierens sind ebenfalls möglich und bekannt. Auf den sich an die Sortiereinrichtung 6 anschließenden Förderbändern 9 bilden sich Sortierreihenfolgen 10 der Packstücke 2 aus, die sich aus der Transportreihenfolge 4 der Packstücke 2 vor der Sortiereinrichtung 6 und der Zuordnung der Sortierparameter zu den Packstücken 2 der Transportreihenfolge 4 ergibt.

Die Sortierreihenfolgen 10 werden unterschiedlichen Robotern 11 zugeführt, welchen wenigstens jeweils die vordersten Packstücke 2 der Sortierreihenfolgen 10 zugänglich sind. Die beiden dargestellten und insoweit bevorzugten Roboter 11 sind jeweils anderen Förderbändern 9 und Sortierreihenfolgen 10 zugeordnet, wobei jedem Roboter 11 mehrere Sortierreihenfolgen 10 zugeordnet sind. Jeder Roboter 11 entnimmt von den ihm zugeordneten Sortierreihenfolgen 10 nacheinander Packstücke 2 und übergibt diese in die den jeweiligen Robotern 11 zugeordneten Transporteinheiten 12. Das Beladen der Transporteinheiten 12 erfolgt mithin in einer Beladereihenfolge von Packstücken 2, wobei die Packstücke 2 der Beladereihenfolge vor der Steuereinrichtung 8 anhand des wenigstens einen Sortierparameters der Packstücke 2 der dem Roboter 11 zugeordneten parallelen Sortierreihenfolgen 10 und anhand des Beladezustands der zugeordneten Transporteinheiten 12 ermittelt werden, um das Beladen der Transporteinheiten 12 möglichst zu verbessern bzw. zu optimieren.

Die Steuereinrichtung 8 gibt die Beladereihenfolge der Packstücke 2 bei dem dargestellten und insoweit bevorzugten Verfahren wenigstens teilweise hinsichtlich eines platzsparenden Verladens der Packstücke 2 in die Transporteinheiten 12 vor. Die Beladereihenfolge der Packstücke 2 wird wenigstens teilweise auch hinsichtlich der Stapelbarkeit der Packstücke 2 in der wenigstens einen Transporteinheit 12 vorgegeben. Dabei wird die Stapelbarkeit der Packstücke 2 von der Steuereinrichtung 8 anhand des Gewichts, der Formstabilität und/oder der Widerstandsfähigkeit der Packstücke 2, insbesondere basierend auf dem wenigstens einen Sortierparameter, abgeschätzt.

Bei der Festlegung der Beladereihenfolge steht der Steuereinrichtung 8 ein großes Maß an Flexibilität und Variationsmöglichkeit zur Verfügung. Die Roboter 11 können Packstücke 2 von unterschiedlichen Sortierreihenfolgen 10 und dort jeweils von unterschiedlichen Positionen innerhalb der Sortierreihenfolgen 10 entnehmen. Zudem können die Roboter 11 die einzelnen Packstücke 2 in unterschiedliche Transporteinheiten 12 verladen. Die Steuereinrichtung 8 macht von dieser Flexibilität in der Weise Gebrauch, dass der Laderaum in den Transporteinheiten 12 zweckmäßig ausgenutzt wird und dass sensible oder fragile Packstücke 2 möglichst oben sowie große und schwere Packstücke 2 möglichst unten in den Transporteinheiten 12 verladen werden.

Nicht dargestellt ist, dass die Förderbänder 9 zum Transport der Sortierreihenfolgen 10 als Teleskopförderbänder ausgebildet sein können. Diese können dann aus und wieder eingefahren werden, um dem zugeordneten Roboter 11 die jeweils geeigneten, nächsten Packstücke 2 anzubieten. Alternativ oder zusätzlich kann aber auch der Roboter 11 selbst räumlich verstellbar sein, um stets die jeweils gewünschte Transporteinheit 12 in geeigneter Weise beladen und/oder Packstücke 2 von unterschiedlichen Positionen der Sortierreichenfolgen 10 entnehmen zu können.

Bei der dargestellten und insoweit bevorzugten Sortierstation 1 werden die Packstücke 2 der Transportreihenfolge 4 in der Sortiereinrichtung 6 in sechs verschiedene Sortierreihenfolgen 10 sortiert, wobei jede der Sortierreihenfolgen 10 aus jeweils einem Förderband 9 angeordnet ist, um von dem Förderband 9 in Richtung eines Roboters 11 transportiert zu werden. Dem links dargestellten Roboter 11 sind drei parallele Sortierreihenfolgen 10 zugeordnet. Die Packstücke 2 dieser drei Sortierreihenfolgen 10 werden nacheinander von dem gemeinsamen Roboter 11 in eine Mehrzahl von Transporteinheiten 12 verladen, wobei einerseits nach Möglichkeit Platz in den Transporteinheiten 12 gespart und andererseits die Packstücke 2 in den Transporteinheiten 12 so gestapelt werden, dass diese nicht durch darüber gestapelte Packstücke 2 beschädigt werden. Die nächsten beiden parallelen Sortierreihengfolgen 10 sind einem weiteren Roboter 11 zugeordnet, der die Packstücke 2 von diesen Sortierreihenfolgen 10 entnimmt und in andere Transporteinheiten 12 stapelt. Auch dabei wird versucht, ein platzsparendes Stapeln zu erreichen und eine Beschädigung von Packstücken 2 zu vermeiden.

In der rechts dargestellten Sortierreihenfolge 10 werden von der Sortiereinrichtung 6 solche Packstücke 2 zusammengefasst, die von einem Roboter 11 nicht oder nicht zuverlässig in eine Transporteinheit 12 geladen werden können. Die Packstücke 2 können dabei beispielsweise so wenig widerstandsfähig oder fragil sein, dass ein Roboter 11 die Packstücke 2 wahrscheinlich beschädigen würde. Die Packstücke 2 können alternativ oder zusätzlich auch so groß und/oder so geformt sein, dass sie von einem Roboter 11 nicht zuverlässig ergriffen werden können. Die Packstücke 2 der rechts dargestellten Sortierreihenfolge 10 werden daher von einer Person 14 von Hand in wenigstens eine Transporteinheit 12 verladen. Die von der Person 14 und/oder von den Robotern 11 beladenen Transporteinheiten 12 werden in der dargestellten und insoweit bevorzugten Sortierstation 1 in Nutzfahrzeuge 15 verladen und mittels den Nutzfahrzeugen 15 von der Sortierstation 1 abtransportiert.

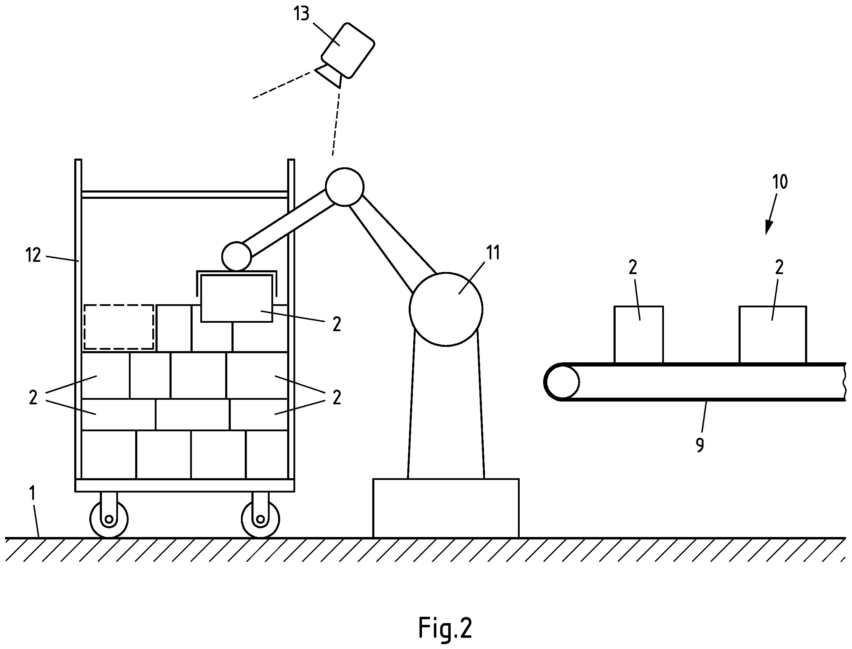

Die Packstücke 2 werden beispielsweise gemäß der Beladereihenfolge der Packstücke 2 wie in der Fig. 2 dargestellt von Robotern 11 in Transporteinheiten verladen. Beim dargestellten und insoweit bevorzugten Verfahren sind die Transporteinheiten 12 in Form von Rollwagen ausgebildet, die dann ihrerseits in Aufbauten von Nutzfahrzeugen wie Lastkraftwagen, Anhängern oder Sattelaufliegern verladen werden können. Die Steuereinrichtung 8 weist die Roboter 11 an, an welcher Stelle die Packstücke 2 jeweils in den Transporteinheiten 12 zu platzieren sind, um die Ladekapazität der Transporteinheiten 12 gut ausnutzen zu können. Dies ist durch die durch eine gestrichelte Linie hervorgehobene Lücke in der Transporteinheit 12 zum Einlegen des nächsten Packstücks 2 schematisch dargestellt. Ungenutzte Räume der Transporteinheiten 12 zwischen den Packstücken 2 sollen möglichst vermieden oder verringert werden. Den Transporteinheiten 12 sind jeweils, insbesondere optische, Sensoren 13 zugeordnet, welche jeweils den aktuellen Beladezustand erfassen und diesen an die Steuereinrichtung 8 weiterleiten. Bedarfsweise können die Sensoren 13 auch nur Aufnahmen von den Transporteinheiten 12 weiterleiten, aus denen dann die Steuereinrichtung 8 den aktuellen Beladezustand ermittelt.

Zusätzlich oder alternativ kann die Beladereihenfolge durch die Steuereinrichtung 8 unter Berücksichtigung des aktuellen Beladeszustands von Transporteinheiten 12 so gewählt werden, dass robustere und spezifisch schwerere Packstücke 2 im unteren Bereich der Transporteinheiten 12 und spezifisch leichtere und fragilere Packstücke 2 im oberen Bereich der Transporteinheiten 12 verladen werden. Die leichteren und fragileren Packstücke 2 werden dann nicht durch die stabileren und schwereren Packstücke 2 beschädigt oder zerdrückt, da die stabileren und schwereren Packstücke 2 unter den leichteren und fragileren Packstücken 2 in den Transporteinheiten angeordnet werden.

### Bezugszeichenliste

- 1: Sortierstation
- 2: Packstück
- 3: Transporteinheit
- 4: Transportreihenfolge
- 5: Förderband
- 6: Sortiereinrichtung
- 7: Scanneinrichtung
- 8: Steuereinrichtung
- 9: Förderband
- 10: Sortierreihenfolge
- 11: Roboter
- 12: Transporteinheit
- 13: Sensor
- 14: Person
- 15: Nutzfahrzeug

## Patentansprüche

1. Verfahren zum Umverteilen von Packstücken (2) in einer Sortierstation (1),
- bei dem die Packstücke (2) in wenigstens einer Transportreihenfolge (4) zum Erfassen jeweils wenigstens eines Sortierparameters nacheinander gemäß der wenigstens einen Transportreihenfolge (4) gescannt werden,
- bei dem die gescannten Packstücke (2) in der wenigstens einen Transportreihenfolge (4) in einer Sortiereinrichtung (6) anhand des wenigstens einen Sortierparameters sortiert und in wenigstens zwei parallele Sortierreihenfolgen (10) von Packstücken (2) aufgeteilt werden,
- bei dem die Packstücke (2) der parallelen Sortierreihenfolgen (10) nacheinander gemäß den Sortierparametern mit wenigstens einem gemeinsamen Roboter (11) in wenigstens eine Transporteinheit (12) verladen werden,
- bei dem eine Steuereinrichtung (6) anhand des wenigstens einen Sortierparameters der Packstücke (2) der wenigstens zwei parallelen Sortierreihenfolgen (10) und, vorzugsweise, anhand wenigstens eines Beladezustands der wenigstens einen Transporteinheit (12), eine optimierte Beladereihenfolge für den wenigstens einen gemeinsamen Roboter (11) ermittelt und
- bei dem die Packstücke (2) gemäß der optimierten Beladereihenfolge von dem wenigstens einen gemeinsamen Roboter (11) in die wenigstens eine Transporteinheit (12) verladen werden.

2. Verfahren nach Anspruch 1,
- bei dem von jeweils wenigstens einem gemeinsamen Roboter (11) die Packstücke (2) von separaten parallelen Sortierreihenfolgen (10) nacheinander gemäß den Sortierparametern der Packstücke (2) jeweils der separaten parallelen Sortierreihenfolgen (10) in jeweils wenigstens eine unterschiedliche Transporteinheit (12) verladen werden.

3. Verfahren nach Anspruch 1 oder 2,
- bei dem der Beladezustand der wenigstens einen Transporteinheit (12) während des Verladens der Packstücke (2) mittels wenigstens eines, insbesondere optischen, Sensors (13) ermittelt und zur Optimierung der Beladereihenfolge an die Steuereinrichtung (8) weitergegeben wird.

4. Verfahren nach einem der Ansprüche 1 bis 3,
- bei dem der wenigstens eine Sortierparameter der Packstücke (2) mittels einer, insbesondere optischen, Scanneinrichtung, vorzugsweise mittels eines Sechsseiten-Scanners und/oder eines Linienscanners, insbesondere eines RGB-Linienscanners und/oder eines Volumenscanners, gescannt wird.

5. Verfahren nach einem der Ansprüche 1 bis 4,
- bei dem der wenigstens eine Sortierparameter der Packstücke (2) wenigstens ein Größenparameter der Packstücke (2) ist und
- bei dem, vorzugsweise, wenigstens zwei, insbesondere wenigstens drei, Größenparameter von jedem Packstück (2), eine, insbesondere maximale, Höhe, eine, insbesondere maximale, Länge und/oder eine, insbesondere maximale, Breite der Packstücke (2) gescannt wird.

6. Verfahren nach einem der Ansprüche 1 bis 5,
- bei dem von der Steuereinrichtung (8) anhand des wenigstens einen Größenparameters, der Form und/oder der Oberfläche der Packstücke (2) ermittelt wird, ob es sich bei der Form um wenigstens eine vorbestimmte Sonderform der Packstücke (2) handelt und
- bei dem, vorzugsweise, Packstücke (2) mit bestimmten Größenparametern, Formen und/oder Oberflächen in separate Sortierreihenfolgen (10) sortiert werden.

7. Verfahren nach Anspruch 5 oder 6,
- bei dem von der Steuereinrichtung (8) anhand des wenigstens einen Größenparameters, der Form und/oder der Oberfläche der Packstücke (2) elektronische 3D-Modelle der Packstücke (2) erzeugt werden und
- bei dem die Steuereinrichtung (8) die Packstücke (2) wenigstens auch anhand der elektronischen 3D-Modelle der Packstücke (2) unterschiedlichen Sortierreihenfolgen (10) zuweist.

8. Verfahren nach einem der Ansprüche 1 bis 7,
- bei dem der wenigstens eine Sortierparameter der Packstücke (2) wenigstens ein Gewicht der Packstücke (2) ist und
- bei dem, vorzugsweise, Packstücke (2) mit bestimmtem Gewicht in separate Sortierreihenfolgen (10) sortiert werden.

9. Verfahren nach einem der Ansprüche 1 bis 8,
- bei dem von der Steuereinrichtung (8) anhand des wenigstens einen Größenparameters, der Form, der Oberfläche und/oder des Gewichts der Packstücke (2) auf Artikelklassen der Packstücke (2) geschlossen wird und
- bei dem die Steuereinrichtung (8) die Packstücke (2) wenigstens auch anhand der Artikelklassen der Packstücke (2) unterschiedlichen Sortierreihenfolgen (10) zuweist.

10. Verfahren nach Anspruch 9,
- bei dem wenigstens eine Artikelklasse der Packstücke (2) von dem wenigstens einen gemeinsamen Roboter (11) nicht handhabbare Packstücke (2) umfasst und
- bei dem, vorzugsweise, die Packstücke (2) der wenigstens einen Sortierreihenfolge (10) von mit dem wenigstens einen gemeinsamen Roboter (11) nicht handhabbare Packstücke (2) von Hand in wenigstens eine Transporteinheit (12) verladen werden.

11. Verfahren nach einem der Ansprüche 1 bis 10,
- bei dem der gemeinsame Roboter (11) nacheinander, insbesondere jeweils die vordersten, Packstücke (2) von unterschiedlichen Sortierreihenfolgen (10) der wenigstens zwei parallelen Sortierreihenfolgen (10) zum Verladen in die wenigstens eine Transporteinheit (12) entnimmt und
- bei dem, vorzugsweise, die Beladereihenfolge von der Steuereinrichtung (8) anhand des wenigstens einen Sortierparameters und der wenigstens zwei parallelen Sortierreihenfolgen (10) und/oder anhand des wenigstens einen Sortierparameters und der wenigstens zwei parallelen Sortierreihenfolgen (10) von der Steuereinrichtung (8) vorgegeben wird, welches Packstück (2) der Beladereihenfolge in welche von mehreren Transporteinheiten (12) verladen wird.

12. Verfahren nach Anspruch 11,
- bei dem die Steuereinrichtung (8) die Beladereihenfolge der Packstücke (2) wenigstens teilweise hinsichtlich einer platzsparenden Verladung der Packstücke (2) in die wenigstens eine Transporteinheit (12) vorgibt.

13. Verfahren nach Anspruch 12,
- bei dem die Steuereinrichtung (8) die Beladereihenfolge der Packstücke (2) wenigstens teilweise hinsichtlich der Stapelbarkeit der Packstücke (2) in der wenigstens einen Transporteinheit (12) vorgibt und
- bei dem, vorzugsweise, die Stapelbarkeit der Packstücke (2) von der Steuereinrichtung (8) anhand des Gewichts, der Formstabilität und/oder der Widerstandsfähigkeit der Packstücke, insbesondere basierend auf dem wenigstens einen Sortierparameter, abgeschätzt wird.

14. Verfahren nach einem der Ansprüche 1 bis 13,
- bei dem die Packstücke (2) zur Bildung der wenigstens einen Transportreihenfolgen (4) aus Transporteinheiten (12) in Form von Nutzfahrzeugaufbauten, vorzugsweise Kofferaufbauten, insbesondere eines Lastkraftwagens, Anhängers oder Sattelaufliegers und/oder aus Transporteinheiten (12) in Form von nicht selbst angetriebenen Niederflurfahrzeugen, insbesondere in Form von Rollwagen, Gitterboxen oder ULD entladen werden und/oder
- bei dem die Packstücke (2) von dem wenigstens einen gemeinsamen Roboter (11) in wenigstens ein Nutzfahrzeug (15) und/oder ein nicht selbst angetriebenes Niederflurfahrzeug, insbesondere in Form eines Rollwagens, einer Gitterbox oder eines ULD, verladen werden.

15. Verfahren nach einem der Ansprüche 1 bis 14
- bei dem als Packstücke (2) umverpackte Stückgüter (2), insbesondere jeweils mit einem Karton umverpackte Stückgüter, Taschen, Beutel, Tüten und/oder Briefumschläge sind.
